(19) Europäisches Patentamt
European Patent Office
Office européen des brevets

(11) **EP 3 751 699 B1**

(12) **EUROPÄISCHE PATENTSCHRIFT**

(45) Veröffentlichungstag und Bekanntmachung des Hinweises auf die Patenterteilung:
**15.09.2021  Patentblatt 2021/37**

(51) Int Cl.:
$H02J\ 13/00$ (2006.01)

(21) Anmeldenummer: **19179955.0**

(22) Anmeldetag: **13.06.2019**

(54) **VERFAHREN UND ANORDNUNG ZUR SCHÄTZUNG EINES NETZZUSTANDS EINES ENERGIEVERTEILUNGSNETZES**

METHOD AND APPARATUS FOR ESTIMATING A CONDITION OF AN ENERGY DISTRIBUTION NETWORK

PROCÉDÉ ET DISPOSITIF D'ESTIMATION D'UN ÉTAT D'UN RÉSEAU DE DISTRIBUTION D'ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.12.2020  Patentblatt 2020/51**

(73) Patentinhaber: **Siemens Aktiengesellschaft 80333 München (DE)**

(72) Erfinder: **Henselmeyer, Sylwia 91052 Erlangen (DE)**

(56) Entgegenhaltungen:
**EP-A1- 3 467 984      WO-A1-2018/191436
CN-A- 107 846 016**

**Beschreibung**

Die Erfindung betrifft ein Verfahren zur Schätzung eines Netzzustands eines Energieverteilungsnetzes nach dem Oberbegriff des Anspruchs 1 sowie eine zentrale Rechneranordnung nach dem Oberbegriff des Anspruchs 5 und ein Computerprogrammprodukt nach dem Anspruch 9.

Aus der Produktbroschüre "Intelligent control center technology - Spectrum Power", Siemens AG 2017, Article-No. EMDG-B90019-00-7600, ist eine Software für ein sog. "Supervisory Control and Data Acquisition (SCADA)" System, also eine Leitstelle, bekannt. SCADA Systeme sind zur Kontrolle und Steuerung von Energienetzen lange bekannt (Wikipedia permanenter link: https://en.wikipedia.org/w/index.php?title=SCADA&oldid=858433 181). Dabei werden Messwerte von Sensoren, beispielsweise von Spannungsmessgeräten und Strommessgeräten im Energienetz, aggregiert und zur Leitstelle über-mittelt. Zur Steuerung von Leistungsschaltern und Trennschaltern im Energienetz sowie zur Ansteuerung von Energieerzeugern wie Kraftwerken werden Steuerbefehle ins Energienetz gesendet. Diese Steuerbefehle werden von "Remote Terminal Units" (RTUs), "programmable logic Controllers" (PLCs) und "intelligent devices" (IEDs) empfangen und verarbeitet, um die Leistungsschalter und die Trennschalter usw. anzusteuern. In der Leistelle ist bisher häufig ein lokales Rechenzentrum vorgesehen, auf dem die Leitstellensoftware wie z.B. Sprectrum Power läuft. Es werden rund um die Uhr Techniker in der Leitstelle bereitgehalten, die die Anzeigen des SCADA über den aktuellen Betriebszustand des Energienetzes kontrollieren und im Fehlerfall Gegenmaßnahmen wie z.B. die Abschaltung eines Netzabschnitts durchführen können. Die Leistellensoftware wird in der Regel in einer zentralen Rechneranordnung betrieben, die beispielsweise als ein Rechenzentrum mit Prozessoren, Datenspeichern und Bildschirmen ausgebildet sein kann. Der Begriff "zentral" zielt dabei darauf ab, dass alle Messdaten aus dem Energienetz und alle Steuerbefehle für das Energienetz zentral verarbeitet werden.

Auch eine teilweise oder vollständige Ausbildung der RechnerAnordnung bzw. der Leitstellensoftware als eine Cloud-Applikation, also eine Serveranordnung mit dezentral verteilten Ressourcen zur Datenverarbeitung und Datenspeicherung, die über ein Datennetzwerk wie z.B. das Internet verbunden sind, kann vorgenommen werden.

Als Begleiterscheinung einer immer weiteren Verbreitung von verteilter Energieerzeugung, also beispielsweise durch Photovoltaik-Anlagen oder Windkraftanlagen, wird durch die immer zahlreicheren lokalen Energieerzeuger, die in das Nieder- und Mittelspannungsnetz einspeisen, eine Vorhersage eines Systemzustands des Energienetzes erschwert. Auch die Abhängigkeit von Wettereinflüssen steigt, weil z.B. Solarzellen stark von der Bewölkung und Windkraftanlagen von der Windstärke beeinflusst werden. Diese Probleme wirken auch auf die nächsthöhere Spannungsebene eines Energieübertragungsnetzes der Hochspannungsebene zurück, das hierdurch schwieriger zu steuern und vorherzusagen ist.

Bisher werden in der Regel Last- und Erzeugungsprognosen und/oder Fahrpläne in Verbindung mit einem sog. "Distribution System Power Flow (DSPF)" eingesetzt, um einen zukünftigen Netzzustand abzuschätzen. Dabei verwendet DSPF statische Betriebsmitteldaten, lokalen Vorhersage für einen Energieverbrauch und eine Energieerzeugung sowie dynamische Topologie-Informationen (d.h. welche Leitungen zwischen den einzelnen Komponenten aktuell geschaltet sind), um einen prognostizierten Spannungsbetrag und Spannungswinkel an jedem Netzwerkabschnitt zu berechnen. Ein solcher Ansatz ist beispielsweise aus der Produktbroschüre "Spectrum Power Aktives Netzwerkmanagement", Siemens AG 2016, EMFG-B10104-00, bekannt. Die technischen Grundlagen sind aus den Veröffentlichungen "Real-Time Distribution System State Estimation" von Dzafic et al., 2010 IEEE 978-1-4244-7398-4 und "Real-Time Estimation of Loads in Radial and Unsymmetrical Three-Phase Distribution Networks" von Dzafic et al., 2013 IEE 0885-8950, bekannt.

Ferner werden zur Überwachung und Kontrolle von Energieverteilnetzwerken, insbesondere der Niederspannungsebene, sog. "Digital Substations" eingesetzt, also Unterwerke mit eigener Rechnerkapazität zur Datenerfassung und Auswertung, eingesetzt. Die Einbindung eines solchen Unterwerks in ein SCADA System ist beispielsweise aus der Veröffentlichung "Digital substations with the Future built in", Siemens AG 2017, Article-No. EMDG-B10130-00-7600, von Seite 5 bekannt.

Es sind aus den Druckschriften WO 2018/191436 A1, EP 3 467 984 A1 und CN 107 846 016 A Verfahren zur Bestimmung eines Netzzustands bekannt.

Ausgehend von bekannten Verfahren zur Schätzung eines Netzzustands eines Energieverteilungsnetzes stellt sich an die Erfindung die Aufgabe, ein Verfahren anzugeben, mit dem vergleichsweise einfach und schnell ein zukünftiger Systemzustand des Energieverteilungsnetzes geschätzt werden kann.

Die Erfindung löst diese Aufgabe durch ein Verfahren gemäß Anspruch 1.

Ein Netzzustand im Sinne der Erfindung umfasst beispielsweise eine Angabe über den Spannungsbetrag bzw. eine elektrische Spannung und den Spannungswinkel bzw. Phasenwinkel an jedem Netzwerkabschnitt. Ein Netzwerkabschnitt wird z.B. auch als "network bus" im Sinne des "bus-branch"-Modells bezeichnet. Er fungiert als ein Netzmodell-Verbindungspunkt, an dem modellierte Betriebsmittel des elektrischen Netzes wie Leitungen, Transformatoren, Verbraucher und Erzeuger elektrischer Energie verknüpft sein können.

Eine zentrale Rechneranordnung weist beispielsweise Prozessoren, Datenspeicher und Bildschirme auf. Der Begriff zentral zielt dabei darauf ab, dass alle wesentlichen Messdaten aus dem Energienetz und alle wesentlichen Steuerbefehle für das Energienetz zentral verarbeitet werden.

Messeinrichtungen können beispielsweise Spannungsmessgeräte, Strommessgeräte, Phasenmessgeräte bzw. "Phasor measurement units (PMUs)", "Remote Terminal Units" oder Intelligente Stromzähler bzw. "Smart Meter", "Intelligent electrical devices (IEDs)" zur Überwachung von Schaltern und anderen Betriebsmitteln, Steuereinrichtungen z.B. für Intelligente Substations oder Schutzgeräte sein. Die Datenübertragung der Messdaten kann dabei z.B. nach dem IEC 61850 Protokoll oder nach dem Internet-Protokoll erfolgen. Es können per Powerline-Communication über das Stromnetz, oder per Funk z.B. per LTE (4G) oder per Kabel wie z.B. Ethernet oder Lichtwellenleiter Daten übertragen werden.

Die Zustandsschätzungseinrichtung weist mindestens einen Prozessor auf, um komplexe Berechnungen zur Durchführung des naiven-Bayes-Verfahrens zu ermöglichen. Es kann auch ein Rechenzentrum oder eine räumlich verteilte Server- und Datenbankarchitektur wie eine Cloud eingesetzt werden.

Naive-Bayes-Verfahren sind als Methoden des maschinellen Lernens beispielsweise im Bereich der Textanalyse eingesetzt worden. Zwar ist es aus "A Naive Bayes Classification Approach for Short-Term Forecast of a Photovoltaic System" von Quek et al. 2017, DOI 10.5176/2251-189X_SEES17.5, bekannt, aus lokalen Messwerten wie z.B. Tageszeit, Außentemperatur, Lichtstärke, Temperatur eines Moduls mit Solarzellen, eine Vorhersage einer zukünftigen Leistung der PV-Anlage zu treffen. Es ist jedoch bisher im Stand der Technik kein Ansatz bekannt, ein Naive Bayes Verfahren für eine optimierte Vorhersage eines Systemzustands im elektrischen Energieverteilungsnetz, insbesondere im Verteilnetz der Niederspannungsebene, durchzuführen.

Im Gegensatz zu bisherigen Ansätzen zur Vorhersage des Netzzustands, insbesondere in Verteilnetzen, können mit dem naive Bayes Ansatz vergleichsweise genaue Vorhersagen erstellt werden, obwohl es häufig zu wenige Messstellen für eine komplette Überwachung des Netzes gibt und aus Gründen des Aufwands nicht jede im Netz direkt modulierte Anlage mit einer eigenen Vorhersage erfasst werden kann. Dies spart Zeit und Kosten ein und ermöglicht es mit der vergleichsweisen genauen Vorhersage, Probleme der Netzstabilität frühzeitig zu erkennen und damit die Verfügbarkeit des Energienetzes zu verbessern.

Bei dem bisherigen Ansatz zur Zustandsschätzung mittels dem eingangs beschriebenen DSPF ergibt sich regelmäßig der Nachteil, dass lokale Vorhersagen nicht für alle Anschlussstellen an jeden Netzwerkabschnitt zur Verfügung stehen, weil nicht überall geeignete Messeinrichtungen installiert sind. Darüber hinaus führt eine Aggregation solcher lokalen Vorhersagen mit entsprechenden großen Fehlerungenauigkeiten dazu, dass auch in einer aggregierten Netzzustandsschätzung ein vergleichsweise großer Fehler anzunehmen ist.

Es ist ein wesentlicher Vorteil des erfindungsgemäßen Verfahrens, dass anstatt des DSPF ein sog. "Distribution system state estimator (DSSE)" eingesetzt wird. Der DSSE ist ausgebildet, zumindest einige der verfügbaren Systeminformationen wie z.B. statische Betriebsmitteldaten, lokale Vorhersagen für einen Energieverbrauch und eine Energieerzeugung, dynamische Topologie-Informationen (d.h. welche Leitungen zwischen den einzelnen Komponenten aktuell geschaltet sind), dynamische analoge Leistungsmessungen, Spannung- und Stromstärkewerte sowie Unterschiede in der Genauigkeit verschiedener Messgeräte, zu berücksichtigen. Aus diesen Informationen kann mittels eines DSSE Verfahrens der wahrscheinlichste zukünftige Netzzustand geschätzt werden. Dabei ist als Ergebnis der Schätzung eine Angabe von Spannung und Phasenwinkel an jedem Netzwerkabschnitt zu verstehen.

In einer bevorzugten Ausführungsform des erfindungsgemäßen Verfahrens wird für das Energieverteilungsnetz zumindest teilweise ein Niederspannungsnetz verwendet. Dies ist ein Vorteil, weil die Vorhersage des Netzzustands aufgrund der Vielzahl von Energieverbrauchern und Erzeugern auf dieser Spannungsebene besonders problematisch ist.

Es werden für die Vorhersage spezifische Vorhersagen für einzelne Messeinrichtungen berücksichtigt, die jeweils einen messstellenspezifischen Fehlergrad aufweisen, wobei anhand des jeweiligen Fehlergrads ein messstellenspezifischer Gewichtungsfaktor derart bestimmt wird, dass spezifische Vorhersagen umso stärker gewichtet werden, je geringer ihr Fehlergrad ist. Dies ist ein Vorteil, weil aufgrund von Erfahrungswerten als besonders akkurat einschätzbare Messstellen stärker berücksichtigt werden können, was die Vorhersagequalität positiv beeinflusst.

In einer weiteren bevorzugten Ausführungsform des erfindungsgemäßen Verfahrens werden die Messeinrichtungen zumindest teilweise in Substations angeordnet. Eine Substation ist dabei im Sinne der Erfindung ein Unterwerk bzw. eine Ortsnetztransformatorenstation. Diese Ausführungsform hat den Vorteil, dass die Messungen einer Substation bereits eine Summe der Einflüsse zahlreicher Verbraucher und Erzeuger elektrischer Energie angeben, so dass insgesamt mit einem weniger fehlerbehafteten Verfahren zu rechnen ist als bei einer Berücksichtigung jeder einzelnen Anschlussstelle eines Erzeugers oder Verbrauchers an einem Netzwerkabschnitt.

In einer weiteren bevorzugten Ausführungsform des erfindungsgemäßen Verfahrens werden zusätzlich historische Messdaten und/oder Wetterdaten herangezogen. Dies ist ein Vorteil, weil häufig bereits eine lange zurückreichende Datensammlung zu einzelnen Messstellen vorliegt.

In einer weiteren bevorzugten Ausführungsform des erfindungsgemäßen Verfahrens werden Messeinrichtungen zumindest teilweise an Einspeisepunkten der Netzwerkabschnitte angeordnet.

In einer weiteren bevorzugten Ausführungsform des erfindungsgemäßen Verfahrens schätzt die Vorhersage den Netzzustand mindestens 5 Stunden im Voraus. Dies ist ein Vorteil, weil 5 Stunden im Voraus genügen, um Gegenmaßnahmen bei anhand der Vorhersagen erkannten Problemen in Energienetz einzuleiten. In einer Weiterbildung der vorgenannten Ausführungsform kann die Vorhersage bis zu 24 Stunden im Voraus mit ausreichender Genauigkeit erfolgen.

In einer weiteren bevorzugten Ausführungsform des erfindungsgemäßen Verfahrens weist die Vorhersage durchschnittlich höchstens eine Abweichung von 10 % vom später tatsächlich festgestellten Netzzustand auf. Die Abweichung von durchschnittlich höchstens 10% ist dabei beispielsweise als ein sog. "mean average percentage error (MAPE)" von 10% zu verstehen.

In einer weiteren bevorzugten Ausführungsform des erfindungsgemäßen Verfahrens wird anhand der Vorhersage eines zukünftigen Netzzustands mittels einer Fehlerkorrektureinrichtung eine Gegenmaßnahme ausgewählt, um Grenzwertverletzungen zu vermeiden. Beispielsweise kann ein vorgegebenes Spannungsband von +/- 10% um die vorgesehene Nennspannung mit einem oberen und einem unteren Grenzwert versehen sein. Über- oder unterschreitet die vorhergesagte Spannung diese Grenzwerte oder droht gar ein Stromausfall, so muss entsprechend in der Gegenwart eine Gegenmaßnahme ergriffen werden. Eine Gegenmaßnahme im Sinne der Erfindung ist beispielsweise eine Reduktion des Verbrauchs eines einzelnen Verbrauchers oder einer Verbrauchergruppe oder eine Reduktion der Einspeiseleistung eines Energieerzeugers oder einer Gruppe von Energieerzeugern oder eine Änderung eines Fahrplans für einen Verbraucher oder Erzeuger elektrischer Energie. Beispielsweise können entsprechende Steuerbefehle über Sollwerte an ansprechende Betriebsmittel im Energienetz gesendet werden.

Ferner stellt sich an die Erfindung, ausgehend von bekannten Verfahren zur Schätzung eines Netzzustands eines Energieverteilungsnetzes, die Aufgabe, eine zentrale Rechneranordnung anzugeben, mit der vergleichsweise einfach und schnell ein zukünftiger Systemzustand des Energieverteilungsnetzes geschätzt werden kann.

Die Erfindung löst diese Aufgabe durch eine zentrale Rechneranordnung gemäß Anspruch 5. Bevorzugte Ausführungsformen ergeben sich aus den Unteransprüchen 6 bis 8. Es ergeben sich dabei sinngemäß die gleichen Vorteile wie eingangs für das erfindungsgemäße Verfahren erläutert.

Des Weiteren stellt sich an die Erfindung, ausgehend von bekannten Verfahren zur Schätzung eines Netzzustands eines Energieverteilungsnetzes, die Aufgabe, ein Computerprogrammprodukt anzugeben, mit dem vergleichsweise einfach und schnell ein zukünftiger Systemzustand des Energieverteilungsnetzes geschätzt werden kann.

Die Erfindung löst diese Aufgabe durch ein Computerprogrammprodukt gemäß Anspruch 9. Es ergeben sich dabei sinngemäß die gleichen Vorteile wie eingangs für das erfindungsgemäße Verfahren erläutert.

Zur besseren Erläuterung der Erfindung zeigen in schematischer Darstellung die

Figur 1    ein Beispiel für ein Energieverteilungsnetz, und

Figur 2    einen Ansatz für ein Naives Bayes-Verfahren, und

Figur 3    ein Beispiel für ein erfindungsgemäßes Verfahren.

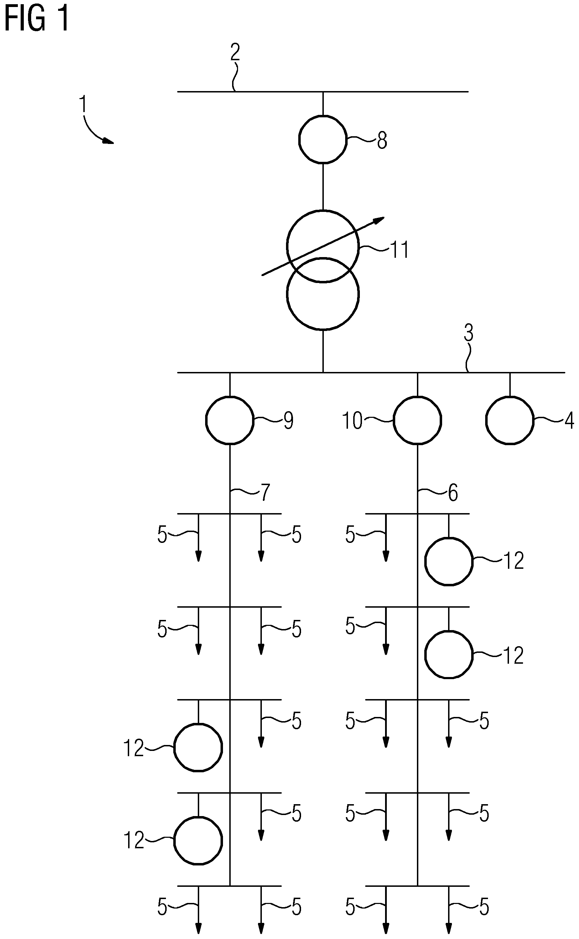

Die Figur 1 zeigt ein einfaches Beispiel für ein Energieverteilungsnetz 1. Das Energieverteilungsnetz 1 weist eine Mittelspannungsebene 2 auf, die über eine Substation mit einer Messstelle 8 und einen Transformator 11 mit einer Niederspannungsebene 3 des Verteilnetzes verbunden ist. Das Verteilnetz 3 weist zwei Abschnitte 6,7 bzw. Zweige auf. Jeder Zweig weist mehrere Generatoren 12 bzw. Erzeuger von elektrischer Energie auf, die jeweils als Kreis dargestellt sind. Dabei kann es sich beispielsweise um Windkraftanlagen oder Photovoltaik-Anlagen handeln. Als Pfeile dargestellt sind elektrische Verbraucher 5, bei denen es sich beispielsweise um Einfamilienhäuser o.Ä. handeln kann. Im Abschnitt 7 ist eine Messstelle 9 in der Verbindungsleitung zum Verteilnetz 3 vorgesehen. Im Abschnitt 6 ist eine Messstelle 19 in der Verbindungsleitung zum Verteilnetz 3 vorgesehen.

Durch die zunehmende Einspeisung von Erzeugern erneuerbarer Energie auf der Verteilnetzebene wird es immer wichtiger, zuverlässige Vorhersagen des Netzzustands treffen zu können. Nur auf der Basis einer belastbaren Vorhersage kann ein Operator einer Leitstelle Probleme erkennen und rechtzeitig Gegenmaßnahmen einleiten. Bisher werden dafür zumeist Vorhersagen für einzelne Betriebsmittel wie z.B. die eingangs genannten Generatoren 12 und Verbraucher 5 erstellt. Diese Informationen werden genutzt, um Leistungsflüsse im Energienetz zu berechnen. Dieser Ansatz hat mehrere Nachteile:

- Die Einzelvorhersagen der Betriebsmittel 5,12 weisen häufig vergleichsweise hohe Fehler auf, weil einzelne Betriebsmittel 5,12 naturgemäß stärkeren Schwankungen unterliegen als aggregierte Betrachtungen - also z.B. die an den Messstellen 8,9,10 gewonnenen Messdaten.
- Es muss jede Einspeisung vorhergesagt werden.
- Alle Vorhersagen werden unabhängig von der Vorhersagequalität herangezogen, um eine zusammengefasste Vorhersage zu erstellen.

- Wetterprognosen sind meistens verfügbar für größere Gebiete und nicht punktuell für Bereiche, an denen einzelne Anlagen installiert sind.

Im Gegensatz dazu schlägt die Erfindung vor, Vorhersagen für die Messstellen 8,9,10 zu erstellen, an denen bereits eine hohe Aggregation der einzelnen Einflüsse der Lasten 5 und der Generatoren 12 vorliegt. Dies hat den besonderen Vorteil, dass vergleichsweise kleine Fehler für die Vorhersage gegeben sind. Weil nicht alle Einspeisungen der Generatoren 12 ins Netz bekannt sind, kann eine Leistungsflussberechnung nicht mehr ausreichend genau durchgeführt werden. Vielmehr muss erfindungsgemäß eine Zustandsschätzung durchgeführt werden, die das gesamte Energieverteilungsnetzes 1 betrifft.

Die Genauigkeit der Vorhersagen kann weiter erhöht werden, wenn für die Vorhersage spezifische Vorhersagen für einzelne Messeinrichtungen berücksichtigt werden, die jeweils einen messstellenspezifischen Fehlergrad aufweisen, wobei anhand des jeweiligen Fehlergrads ein messstellenspezifischer Gewichtungsfaktor derart bestimmt wird, dass spezifische Vorhersagen umso stärker gewichtet werden, je geringer ihr Fehlergrad ist. Zuverlässigere Schätzungen werden damit höher gewichtet für die endgültige Vorhersage.

Die Erfindung schlägt vor, einen sog. Naive-Bayes-Ansatz anzuwenden. Hierfür werden als Eingangsdaten beispielsweise benötigt:

- Historische Messdaten zur Wirkleistung, die bevorzugt eine vergleichbare zeitliche Auflösung wie die als Endergebnis bereitzustellende Vorhersage aufweisen; z.B. 15 Minuten oder 1 Stunde. "Historisch" bezeichnet in diesem Zusammenhang längere Messzeiträume der Erfassung der mit Zeitstempeln versehenen Messdaten, z.B. über Tage, Wochen oder Monate, wobei insbesondere auch eine Kennzeichnung der Art des Tages (Wochentag, Arbeitstag, Wochenende, Feiertag, usw.) vorteilhaft ist. Ferner beziehen sich die historischen Daten zur Wirkleistung auf Netze ohne Korrekturmaßnahmen wie z.B. Abregelung. Sollten sich die historischen Daten zur Wirkleistung bereits auf "korrigierte" Netze beziehen, muss bekannt sein, was korrigiert worden ist, um eine entsprechende Umrechnung (Rückkorrektur) der historischen Daten vorzunehmen.
- Historische und vorhergesagte Wetterdaten: Umgebungstemperatur, Feuchtkugeltemperatur (die tiefste Temperatur, die sich durch direkte Verdunstungskühlung erreichen lässt), Taupunkt, relative Luftfeuchtigkeit, Windgeschwindigkeit, Lichtstärke.
- Soweit verfügbar können auch historische und vorhergesagte Marktdaten wie z.B. der Strompreis usw. eingesetzt werden.

In Naive Bayes Ansatz wird eine Klassifizierung derart vorgenommen, dass die Wahrscheinlichkeit des vorhergesagten Wertes ("Forecast") gegeben ist durch die Messdaten ("Predictor", z.B. Umgebungstemperatur, Feuchtkugeltemperatur, usw.):

$$P(Forecasted_F \mid Predictor) =$$

$$(P(Predictor \mid Forecasted_F) * P(Forecasted_F)) / P(Predictor)$$

Dabei bezeichnen:

| | |
|---|---|
| $Forecasted_F$ | Vorherzusagende Variable: Wirkleistung an der jeweiligen Messstelle. |
| Predictor | Vorhersagevariable, die korreliert ist mit dem vorherzusagendem Wert Wirkleistung. Es kann sich z.B. um Umgebungstemperatur und/oder Feuchtkugeltemperatur handeln. |
| $P(Predictor \mid Forecasted_F)$ | Abhängige Wahrscheinlichkeit, dass Vorhersagevariable den Wert v annimmt, wenn vorherzusagende Variable den Wert w aufweist. |
| $P(Forecasted_F)$ | Wahrscheinlichkeit, dass die vorherzusagende Variable Wirkleistung den Wert f annimmt. |
| $P(Predictor)$ | Wahrscheinlichkeit, dass die Vorhersagevariable den Wert v annimmt. |

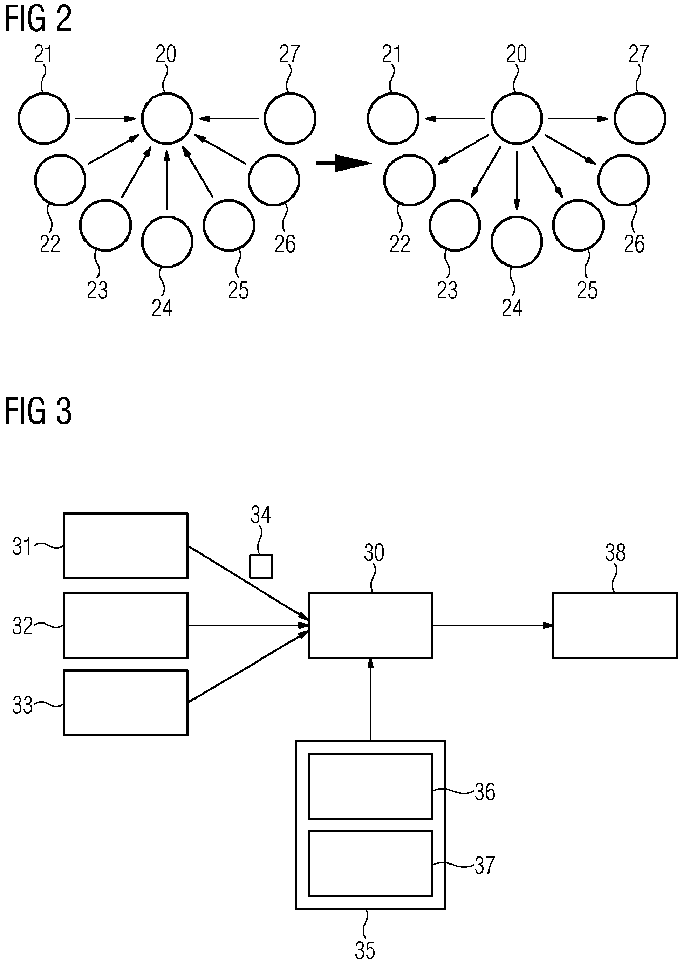

Weiterhin kann im Rahmen des Naive Bayes Klassifizierung das Vorhersagemodel wesentlich vereinfacht werden. Figur 2 zeigt hierzu, dass die Wirkleistung an einer Last 20 - links im der Abbildung - bei bisherigen Ansätzen aus einer Vielzahl von einzeln berechneten Vorhersagevariablen für z.B. vorherige Wirkleistung an der Last, Stunde des Tages, Verdunstungskühlung, Taupunkt, Temperatur, relative Luftfeuchtigkeit oder Art des Tages (Wochentag, Wochenende, Feiertag, usw.) berechnet wird. Dies wird dadurch angedeutet, dass die Pfeile von den einzelnen Vorhersagevariablen zur vorherzusagenden Variable Wirkleistung 20 zeigen. Dies ist jedoch sehr rechenaufwändig.

Im Gegensatz dazu ergibt sich - im rechten Teil der Abbildung

- eine Umkehrung der Pfeilrichtung, da im Naive Bayes Ansatz die Vorhersagevariablen auf die Wirkleistung trainiert werden. Dieses "Umdrehen der Pfeile" bewirkt eine Trennung der bedingten Wahrscheinlichkeit für jede Vorhersagevariable.

Zur Anwendung des Naive Bayes Ansatzes können folgende Schritte vorgesehen werden:

- Iteratives Berechnen eines Vektors für die vorgesehenen Klassen,
- In jeder Klasse berechnen von:

$$P(Class_i \mid Predictors) =$$

$$\prod_{j=1}^{M} \frac{\left(P(Predictor_j|Class_i) * P(Class_i)\right)}{P(Predictor\_j)}$$

- Identifizieren derjenigen Klasse aus dem vorhergehenden Schritt, bei der der höchste Wert erreicht wird:

$$\text{Arg max}$$
$$k \in \{1, k\} \; (P(Class_i \mid Predictors))$$

Um nun die Wirkleistung vorherzusagen, werden zwei Schritte hintereinander durchgeführt:

A) Training
B) Arbeitsschritt

Im Training (A) können folgende Unterschritte durchgeführt werden:

A1) Sammeln historischer Daten
A2) Aufbereiten der historischen Daten, um z.B. Ausreißer und offensichtliche Fehler zu entfernen. Es können ferner fehlende Datenpunkte durch Schätzungen ergänzt werden, um eine lückenlose Zeitreihe zu erhalten.
A3) Ggf. Umwandeln der historischen Daten in diskrete Werte, z.B. mittels eines "equal bin approach".
A4) Bereitstellen eines Trainingsdatensatzes und eines Evaluationsdatensatzes, jeweils mit den aufbereiteten historischen Daten.
A5) Berechnen von bedingten Wahrscheinlichkeitstabellen für jedes Paar aus vorherzusagender Variable (z.B. Wirkleistung an der jeweiligen Messstelle) und Vorhersagevariable, basierend auf dem Trainingsdatensatz. Bevorzugt werden die Tabellen für jede Art eines Tages (Arbeitstag, Wochenende, Feiertag, usw.) sowie entsprechend der zeitlichen Auflösung für jede Tageszeit bestimmt, also z.B. bei gewünschter Vorhersage von einer Stunde in der Zukunft mit stündlicher Auflösung. A6) Durchführen von Naive Bayes mit dem Trainingsdatensatz bzw. den Wahrscheinlichkeitstabellen.
A7) Überprüfen der Vorhersagegenauigkeit aus A7 mit dem Evaluationsdatensatz.
A8) Ermitteln des jeweiligen Vorhersagefehlers für jede Vorhersage an einer Messstelle. Es wird ein messstellenspezifischen Fehlergrad als "mean average percentage error (MAPE)" berechnet.

In dem Arbeitsschritt (B) können z.B. folgende Unterschritte durchgeführt werden:

B1) Ggf. Umwandeln der Messdaten von jeder Messstelle in diskrete Werte, z.B. mittels eines "equal bin approach". Es werden bevorzugt Messdaten des gleichen Zeitpunkts herangezogen, wobei anhand der verfügbaren zeitlichen Auflösung sowie der gewünschten Vorhersagegenauigkeit festgelegt werden kann, wie groß das Zeitfenster an Messdaten ist, das herangezogen werden soll.

B2) Bereitstellen eines Messdatensatzes mit den Messdaten aus Schritt (B1),

B3) Durchführen von Naive Bayes mit dem Messdatensatz und mit den Wahrscheinlichkeitstabellen.

B4) Ermitteln und Abspeichern des wahrscheinlichsten Netzzustands aus Schritt (B3) für den jeweiligen Zeitpunkt.

Bei der Nutzung z.B. in einer Zustandsschätzungseinrichtung wie etwa dem eingangs beschriebenen DSSE können folgende Schritte hinzukommen:

B5) Festlegen eines Zeitpunkts in der Zukunft, an dem die Vorhersage den Netzzustand angeben soll.

B6) Hinzuziehen von Vorhersagedaten und optional prognostizierten Fahrplänen für Erzeuger und/oder Verbraucher aus einer Vorhersagedatenbank, die sich jeweils auf die Messstellen beziehen. Ergänzend können auch Vorhersagedaten zu einzelnen Einspeisepunkten in Netz herangezogen werden.

B7) Festlegen eines Vorhersagefehlers für die die Vorhersagedaten aus Schritt (B6), wobei eine Prozentangabe zw. 0% und 100% festgelegt wird. Es gilt für den jeweiligen Vorhersagefehler w: W= 1/ Vorhersagefehler mit w =100 für Vorhersagefehler =0.

B8) Durchführen der Zustandsschätzung für den Zeitpunkt in der Zukunft.

B9) Auswertung der Vorhersage für den Netzzustand zu dem zukünftigen Zeitpunkt in der Art, dass festgestellt wird, ob zulässige Schwellenwerte für elektrische Größen verletzt werden. Dabei kann es sich beispielsweise um ein vorgegebenes Spannungsband und/oder einen maximalen Strom handeln. Es kann sich ferner um einen Phasenwinkel handeln. Diese Überprüfung wird für alle Netzwerkabschnitte, Leitungen und Transformatoren durchgeführt.

Die Figur 3 zeigt ein Beispiel für ein erfindungsgemäßes Verfahren. Es werden aus einer Vorhersagedatenbank 31 für die Messstellen Vorhersagen 34 entnommen, die insbesondere Gewichtungsfaktoren entsprechend der Vorhersagefehler aus Schritt B(7) aufweisen. Ferner werden Netzwerkdaten 32 zur Topologie und elektrischen Eigenschaften des Netzes und der Betriebsmittel abgerufen. Auch geplante Schalthandlungen 33 werden mit einbezogen.

Mit diesen Eingangsdaten wird in einer Zustandsschätzungseinrichtung 30 die Schätzung durchgeführt und eine Vorhersage eines zukünftigen Netzzustands 38 bereitgestellt.

Optional können auch Vorhersagen für Fahrpläne 36 und Lastvorhersagen 37 berücksichtigt werden.

## Patentansprüche

1. Verfahren zur Schätzung eines Netzzustands eines elektrischen Energieverteilungsnetzes (1) mit einer Vielzahl von Netzwerkabschnitten (6,7), bei dem

   mittels einer zentralen Rechneranordnung (30,31,32,33,34,36,36,37) Messwerte von Messeinrichtungen (8,9,10) empfangen werden, wobei
   mittels einer Zustandsschätzungseinrichtung (30) eine Vorhersage eines zukünftigen Netzzustands (38) durchgeführt wird, wobei jeweils eine elektrische Spannung und ein Phasenwinkel für jeden Netzwerkabschnitt (6,7) ermittelt werden, und wobei
   bei der Vorhersage ein Bayes-Verfahren eingesetzt wird, **dadurch gekennzeichnet, dass**
   das Bayes-Verfahren ein naives Bayes-Verfahren ist, und dass als Eingangsdaten historische Messdaten zur Wirkleistung und/oder historische und vorhergesagte Wetterdaten berücksichtigt werden, und dass
   die Wahrscheinlichkeit des zukünftigen Netzzustands durch die Messwerte gegeben ist, und dass
   für die Vorhersage spezifische Vorhersagen für einzelne Messeinrichtungen (8,9,10) berücksichtigt werden, die jeweils einen messstellenspezifischen Fehlergrad aufweisen, wobei anhand des jeweiligen Fehlergrads ein messstellenspezifischer Gewichtungsfaktor derart bestimmt wird, dass spezifische Vorhersagen umso stärker gewichtet werden, je geringer ihr Fehlergrad ist.

2. Verfahren nach Anspruch 1, **dadurch gekennzeichnet, dass** für das Energieverteilungsnetz (1) zumindest teilweise ein Niederspannungsnetz (3) verwendet wird.

3. Verfahren nach einem der vorhergehenden Ansprüche, **dadurch gekennzeichnet, dass** die Messeinrichtungen (8) zumindest teilweise in Substations angeordnet werden.

4. Verfahren nach einem der vorhergehenden Ansprüche, **dadurch gekennzeichnet, dass** die Messeinrichtungen (9,10) zumindest teilweise ein Einspeisepunkten der Netzwerkabschnitte (6,7) angeordnet werden.

5. Zentrale Rechneranordnung (30,31,32,33,34,36,36,37) zur Schätzung eines Netzzustands (38) eines elektrischen Energieverteilungsnetzes (1) mit einer Vielzahl von Netzwerkabschnitten (6,7), aufweisend:

eine Empfangseinrichtung für Messwerte von Messeinrichtungen (8,9,10) im Energieverteilungsnetz (1), und eine Zustandsschätzungseinrichtung (30), die ausgebildet ist, eine Vorhersage eines zukünftigen Netzzustands (38) durchzuführen, wobei jeweils eine elektrische Spannung und ein Phasenwinkel für jeden Netzwerkabschnitt (6,7) ermittelt werden, und

wobei die Zustandsschätzungseinrichtung (30) ausgebildet ist, bei der Vorhersage ein naives Bayes-Verfahren einzusetzen, **dadurch gekennzeichnet, dass**

die Zustandsschätzungseinrichtung (30) ausgebildet ist, als Bayes-Verfahren ein naives Bayes-Verfahren einzusetzen, und dass

die Zustandsschätzungseinrichtung (30) ausgebildet ist, als Eingangsdaten historische Messdaten zur Wirkleistung und/oder historische und vorhergesagte Wetterdaten zu berücksichtigen,

und wobei die Wahrscheinlichkeit des zukünftigen Netzzustands durch die Messwerte gegeben ist, und dass die Zustandsschätzungseinrichtung (30) ausgebildet ist, für die Vorhersage spezifische Vorhersagen für einzelne Messeinrichtungen zu berücksichtigen, die jeweils einen messstellenspezifischen Fehlergrad aufweisen, wobei anhand des jeweiligen Fehlergrads ein messstellenspezifischer Gewichtungsfaktor derart bestimmt wird, dass spezifische Vorhersagen umso stärker gewichtet werden, je geringer ihr Fehlergrad ist.

**6.** Zentrale Rechneranordnung (30,31,32,33,34,36,36,37) nach Anspruch 6, **dadurch gekennzeichnet, dass** das Energieverteilungsnetz (1) zumindest teilweise ein Niederspannungsnetz (3) aufweist.

**7.** Zentrale Rechneranordnung (30,31,32,33,34,36,36,37) nach einem der Ansprüche 6 bis 8, **dadurch gekennzeichnet, dass** die Messeinrichtungen (8) zumindest teilweise in Substations angeordnet sind.

**8.** Zentrale Rechneranordnung (30,31,32,33,34,36,36,37) nach einem der Ansprüche 6 bis 9, **dadurch gekennzeichnet, dass** die Messeinrichtungen (9,10) zumindest teilweise an Einspeisepunkten (6,7) der Netzwerkabschnitte angeordnet sind.

**9.** Computerprogrammprodukt, das auf einem dauerhaften Datenspeichermedium speicherbar ist und bei Ausführung auf einem Computer ein Verfahren gemäß einem der Ansprüche 1 bis 5 durchführt.

**Claims**

**1.** Method for estimating a grid state of an electrical power distribution grid (1) having a multiplicity of network sections (6, 7), in which

a central computer arrangement (30, 31, 32, 33, 34, 36, 36, 37) is used to receive measured values from measuring devices (8, 9, 10), wherein

a state estimation device (30) is used to make a prediction of a future grid state (38), wherein a voltage and a phase angle are respectively ascertained for each network section (6, 7), and wherein

a Bayes method is used for the prediction, **characterized in that**

the Bayes method is a naive Bayes method, and **in that** the input data taken into consideration are historical measurement data pertaining to the real power and/or are historical and predicted weather data, and **in that**

the probability of the future grid state is provided by the measured values, and **in that**

specific predictions for individual measuring devices (8, 9, 10) that each have a measurement-location-specific degree of error are taken into consideration for the prediction, wherein the respective degree of error is used to determine a measurement-location-specific weighting factor such that specific predictions are weighted all the more highly the lower their degree of error.

**2.** Method according to Claim 1, **characterized in that** a low-voltage grid (3) is used for at least part of the power distribution grid (1).

**3.** Method according to either of the preceding claims, **characterized in that** at least some of the measuring devices (8) are arranged in substations.

**4.** Method according to one of the preceding claims, **characterized in that** at least some of the measuring devices (9, 10) are arranged at feed points of the network sections (6, 7) .

5. Central computer arrangement (30, 31, 32, 33, 34, 36, 36, 37) for estimating a grid state (38) of an electrical power distribution grid (1) having a multiplicity of network sections (6, 7), comprising:

a receiving device for measured values from measuring devices (8, 9, 10) in the power distribution grid (1), and
a state estimation device (30) that is designed to make a prediction of a future grid state (38), wherein a voltage and a phase angle are respectively ascertained for each network section (6, 7), and
wherein the state estimation device (30) is designed to use a naive Bayes method for the prediction,
**characterized in that**
the state estimation device (30) is designed to use a naive Bayes method as Bayes method, and **in that**
the state estimation device (30) is designed to take historical measurement data pertaining to the real power and/or historical and predicted weather data into consideration as input data,
and wherein the probability of the future grid state is provided by the measured values, and **in that**
the state estimation device (30) is designed to take specific predictions for individual measuring devices that each have a measurement-location-specific degree of error into consideration for the prediction,
wherein the respective degree of error is used to determine a measurement-location-specific weighting factor such that specific predictions are weighted all the more highly the lower their degree of error.

6. Central computer arrangement (30, 31, 32, 33, 34, 36, 36, 37) acording to Claim 6, **characterized in that** at least part of the power distribution grid (1) comprises a low-voltage grid (3) .

7. Central computer arrangement (30, 31, 32, 33, 34, 36, 36, 37) acording to one of Claims 6 to 8, **characterized in that** at least some of the measuring devices (8) are arranged in substations.

8. Central computer arrangement (30, 31, 32, 33, 34, 36, 36, 37) acording to one of Claims 6 to 9, **characterized in that** at least some of the measuring devices (9, 10) are arranged at feed points (6, 7) of the network sections.

9. Computer program product that is storable on a permanent data storage medium and, when executed on a computer, performs a method acording to one of Claims 1 to 5.

## Revendications

1. Procédé d'estimation de l'état d'un réseau (1) de distribution d'énergie électrique ayant une pluralité de tronçons (6, 7) de réseau, dans lequel

au moyen d'un agencement (30, 31, 32, 33, 34, 36, 36, 37) informatique central on reçoit des valeurs de mesure de dispositifs (8, 9, 10) de mesure, dans lequel
au moyen d'un dispositif (30) d'estimation d'état, on effectue une prédiction d'un état (38) à venir du réseau, dans lequel on détermine respectivement une tension électrique et un angle de phase pour chaque tronçon (6, 7) du réseau, et dans lequel
on utilise pour la prédiction un procédé de Bayes, **caractérisé en ce que**
le procédé de Bayes est un procédé de Bayes naïf et **en ce que** l'on prend en compte comme données d'entrée des données de mesure historiques sur la puissance active et/ou des données d'intempérie historiques et prédites et **en ce que** la probabilité de l'état à venir du réseau est donnée par les valeurs de mesure et **en ce que** pour la prédiction, on prend en compte des prédictions spécifiques pour divers dispositifs (8, 9, 10) de mesure, qui ont chacun un degré d'erreur spécifique à un point de mesure, dans lequel à l'aide du degré d'erreur respectif, on détermine un facteur de pondération spécifique au point de mesure, de manière à pondérer une prédiction spécifique d'autant plus que son degré d'erreur est plus petit.

2. Procédé suivant la revendication 1, **caractérisé en ce que** l'on utilise pour le réseau (1) de distribution d'énergie au moins en partie un réseau (3) de basse tension.

3. Procédé suivant l'une des revendications précédentes, **caractérisé en ce que** l'on dispose les dispositifs (8) de mesure au moins en partie en sous-stations.

4. Procédé suivant l'une des revendications précédentes, **caractérisé en ce que** l'on dispose les dispositifs (9, 10) de mesure au moins en partie en des points d'alimentation des tronçons (6, 7) du réseau.

**5.** Agencement (30, 31, 32, 33, 34, 36, 36, 37) informatique central d'estimation de l'état (38) d'un réseau (1) de distribution d'énergie électrique, ayant une pluralité de tronçons (6, 7) de réseau, comportant :

un dispositif de réception de valeurs de mesure de dispositifs (8, 9, 10) de mesure dans le réseau (1) de distribution d'énergie, et

un dispositif (30) d'estimation d'état qui est constitué pour donner une prédiction d'un état (38) à venir du réseau, respectivement une tension électrique et un angle de phase étant déterminés pour chaque tronçon (6, 7) du réseau, et

dans lequel le dispositif (30) d'estimation d'état est constitué pour utiliser pour la prédiction un procédé de Bayes naïf, **caractérisé en ce que**

le dispositif (30) d'estimation d'état est constitué pour utiliser comme procédé de Bayes un procédé de Bayes naïf et **en ce que**

le dispositif (30) d'estimation d'état est constitué pour tenir compte comme données d'entrée de données de mesure historiques sur la puissance active et/ou de données d'intempérie historiques et prédites et dans lequel la probabilité de l'état à venir du réseau est donnée par les valeurs de mesure et **en ce que** le dispositif (30) d'estimation d'état est constitué pour prendre en compte pour la prédiction des prédictions spécifiques pour divers dispositifs de mesure, qui ont chacun un degré d'erreur spécifique au point de mesure,

dans lequel, à l'aide du degré d'erreur respectif, on détermine un facteur de pondération spécifique au point de mesure, de manière à pondérer une prédiction spécifique d'autant plus que son degré d'erreur est plus petit.

**6.** Agencement (30, 31, 32, 33, 34, 36, 36, 37) informatique central suivant la revendication 6, **caractérisé en ce que** le réseau (1) de distribution d'énergie a au moins en partie un réseau (3) de basse tension.

**7.** Agencement (30, 31, 32, 33, 34, 36, 36, 37) informatique central suivant l'une des revendications 6 à 8, **caractérisé en ce que** les dispositifs (8) de mesure sont disposés au moins en partie dans des sous-stations.

**8.** Agencement (30, 31, 32, 33, 34, 36, 36, 37) informatique central suivant l'une des revendications 6 à 9, **caractérisé en ce que** les dispositifs (9, 10) de mesure sont disposés au moins en partie en des points (6, 7) d'alimentation des tronçons du réseau.

**9.** Produit de programme d'ordinateur, qui peut être mis en mémoire sur un support de mémoire de données permanentes et qui effectue lorsqu'il est exécuté sur un ordinateur un procédé suivant l'une des revendications 1 à 5.

FIG 1

FIG 2

FIG 3

**EP 3 751 699 B1**

### IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018191436 A1
- EP 3467984 A1
- CN 107846016 A

**In der Beschreibung aufgeführte Nicht-Patentliteratur**

- Intelligent control center technology - Spectrum Power. *Siemens AG 2017, Article-No. EM-DG-B90019-00-7600*
- Spectrum Power Aktives Netzwerkmanagement. *Siemens AG 2016, EMFG-B10104-00*
- **DZAFIC et al.** Real-Time Distribution System State Estimation. *IEEE 978-1-4244-7398-4,* 2010
- **DZAFIC et al.** Real-Time Estimation of Loads in Radial and Unsymmetrical Three-Phase Distribution Networks. *IEE 0885-8950,* 2013
- Digital substations with the Future built in. *Siemens AG 2017, Article-No. EMDG-B10130-00-7600,* 5
- **QUEK et al.** *A Naive Bayes Classification Approach for Short-Term Forecast of a Photovoltaic System,* 2017